**Europäisches Patentamt**

**European Patent Office**

**Office européen des brevets**

(19)

(11)  **EP 1 328 079 A1**

(12)  **EUROPEAN PATENT APPLICATION**

(43) Date of publication:
16.07.2003  Bulletin 2003/29

(51) Int Cl.$^7$: **H04J 11/00**

(21) Application number: **02425011.0**

(22) Date of filing: **14.01.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **STMicroelectronics S.r.l.**<br>**20041 Agrate Brianza (Milano) (IT)** | (72) Inventors:<br>• **Ronchi, Marco**<br>**20040 Cavenago Brianza (Milano) (IT)**<br>• **Della Torre, Luigi**<br>**20035 Lissone (Milano) (IT)**<br><br>(74) Representative: **Bosotti, Luciano et al**<br>**c/o Buzzi, Notaro & Antonielli d'Oulx Srl,**<br>**Via Maria Vittoria 18**<br>**10123 Torino (IT)** |

(54)  **A process for transmitting information using hadamard and/or OVSF codes, device and computer program product therefor**

(57)  In communication systems such as CDMA systems, the information is transmitted by using encoded sequences ($c_j$) consisting of orthogonal codes chosen from between Hadamard codes and OVSF codes. The symbols of the sequences are generated in a dynamic way as symbols $b(r_n r_1 r_0, c_n c_1 c_0)$ belonging to a respective matrix, according to the formula

$$b(r_n..r_1r_0, c_n..c_1c_0) = \overline{c_n \cdot r_n} \ \overline{\oplus}...\overline{\oplus}\overline{c_2 \cdot r_2}\overline{\oplus} \ \overline{r_1 \cdot c_1}\overline{\oplus} \ \overline{c_0 \cdot r_0}$$

where $r_n r_1 r_0$, $c_n c_1 c_0$ designate the row and column coordinates of the symbol expressed in binary form, and the symbol $\oplus$ designates the logic-sum operator,
or according to the expressions equivalent to said formula in terms of Boolean algebra.

*Fig. 5*

EP 1 328 079 A1

**Description**

Field of the invention

The present invention relates to techniques for the transmission of information with the use of codes, and has been developed with particular attention paid to its possible application in the field of communication systems operating according to a Code-Division-Multiple-Access (CDMA) scheme.

Description of the prior art

CDMA-code modulation techniques enable channelling of **n** base-band data vectors encoded with sequences $C_j$ into a single stream through the following relation:

$$x = d_1 \cdot c_1 + d_2 \cdot c_2 + ... + d_m \cdot c_m + ... + d_n \cdot c_n$$

In reception, each vector $d_m$ is reconstructed by multiplying the sequence **x** by the corresponding code $c_m{}^*$ (complex conjugate) on the hypothesis that the following conditions are verified:

$$r = c_m{}^* \cdot x = c_m{}^* \cdot (d_1 \cdot c_1 + d_2 \cdot c_2 + ... + d_m \cdot c_m + ... + d_n \cdot c_n) = d_m$$

$$c_1 \cdot c_j{}^* = 0 \qquad \text{for } i \neq j$$

$$c_i \cdot c_j{}^* = 1 \qquad \text{for } i = j$$

In practice, CDMA modulation performs an operation of spectrum spreading which introduces a redundancy on the content of the data transmitted, in such a way that the stream **x** occupies a band and a bit rate n times greater than the one allocated for each channel $d_j$.

The properties of orthogonality between the various codes enables discrimination of the desired data vector from all the others and from the mode noise. It is thus possible to transmit information with a signal power lower than that of the thermal noise (signal-to-noise ratio in negative dBs).

Among the various types of families of orthogonal codes, the ones adopted for channelling in the CDMA standard are the codes currently referred to as Walsh Hadamard (WH) codes, or simply as Hadamard codes, and Orthogonal-Variable-Spreading-Factor (OVSF) codes.

The aforesaid block codes are optimal in the sense that they maximize the distance between two codes belonging to the same family. In other words, for an assigned code length, the likelihood of confusing in reception two similar codes in the case of transmission affected by noise is the lowest possible.

For general information on Hadamard codes, useful reference may be made to J. Proakis, "Digital Communications", McGraw-Hill, p. 422 et seq., and Roger L. Peterson, "Introduction to Spread Spectrum Communication", Prentice-Hall, p. 542 *et seq.*, as well as to the article by S.W. Golomb and L.D. Baumert, "The Search for Hadamard Matrices", Amer. Math. Monthly.

For general information on OVSF codes, in particular for their application in the UMTS communication standard, useful reference may be made to the 3G TS25.213V.3.2.0 standard document, accessible on the web site www. gpp.org. Again with reference to the UMTS application, the US standards (for example, the IS95CDMA standard) envisage the use of Hadamard codes, whilst in the European context, for the same application, the use of OVSF codes has asserted itself.

In the UMTS standard, the channelling operation envisages that the code length will vary from one channel to another according to the quality of the transmission medium and according to the bit rate required by the user. This may potentially lead to the need for various replicas of the code generators in order to cover all the code lengths required by the service at a given moment. A typical solution indicated in the prior art uses memory tables, or else recursive tree procedures, which, for each channel and at each symbol time, are run through a number of times to deduce the desired code symbol.

There thus exists the need to reduce the amount of resources in any case necessary for generating the aforesaid codes, also taking into account the fact that the equipment that uses the codes is frequently configured in the form of portable devices (for example, UMTS mobile terminals), frequently having the character of miniaturized devices.

## Object and summary of the present invention

The purpose of the present invention is therefore to provide a solution that will enable a further reduction in the amount of resources necessary for generating a Hadamard code and/or an OVSF code, in particular without having to use memories and without having to provide various replicas of the code generators in order to cover all the lengths required by the service at a given moment, as could be required in the framework of the UMTS standard.

According to the present invention, the above purpose is achieved thanks to a process having the characteristics specified in the claims which follow. The invention also relates to the corresponding system, as well as to the corresponding computer program product, i.e., a product which can be directly loaded into the memory of a digital processor and which comprises portions of software code for obtaining the process according to the invention when the product is run on a numerical computer.

As has already been said previously, according to the known solutions existing in the literature the vectors of the symbols are stored in memories or else are calculated *en bloc* using recursive procedures.

For codes of length $n = 2^9$ samples, each memory would have a size $2^9 \times 2^9 = 262144$ bits, whilst the recursive solution, albeit reducing the memory size to the value $2 \times 2^9 = 1024$ bits, adds complexity and latency to the logic part of the algorithm.

Instead, the solution according to the invention generates, instant by instant, only the symbol that is to be processed, thus enabling a saving on resources that would otherwise be allocated for other non-utilized symbols.

There is thus a reduction in the power dissipated and in the area occupied in the hardware implementation, it likewise being possible to minimize the latency in the software implementation. The efficiency of the solution according to the invention is thus amplified when the need exists of handling a plurality of serial-data channels simultaneously. In fact, in the case of processing of serial-data streams, such as in the case of telecommunications, the throughput of the bits of code takes place serially without the use of buffers for each code. The bits are simply generated instant by instant as required.

The solution according to the invention may possibly be implemented in such a way as to give rise to a structure configured for generating a single type of base code, whether this be a Hadamard code or an OVSF code; the said structure may then be driven in such a way that the code actually generated is either one or the other, by means of a simple operation of modification or translation of the index that identifies, in the context of a given code, a given string. This solution, to which the Italian patent application TO2000A000871 refers, is based upon the recognition of the fact that the strings of the two codes in question (Hadamard and OVSF) are in effect identical even though they are, so to speak, "permuted" in the two codes, in so far as the indices that identify identical strings are different in the two codes. In this way it is possible to avoid separate generation of Hadamard codes on the one hand, and OVSF codes on the other, the generation of both of the codes being brought back to the operation of generation of a single code.

## Detailed description of the annexed drawings

The invention will now be described, purely by way of non-limiting example, with reference to the attached drawings, in which:

- Figure 1 illustrates, in the form of a block diagram, the general structure of a transmitter of a communication system based upon channelling of n data channels into a single stream;
- Figure 2, which comprises four parts, namely a, b, c, and d, illustrates the characteristics of Hadamard and OVSF matrices of order 2 and 4;
- Figure 3 is a schematic illustration of the tree-like iterative construction of the OVSF matrix;
- Figure 4 illustrates the scheme of identification of the quadrant to which a symbol belongs within a Hadamard matrix; and
- Figure 5 illustrates the general diagram of a dynamic generator of Hadamard-OVSF codes which operates according to the invention.

## Detailed description of an example of embodiment of the invention

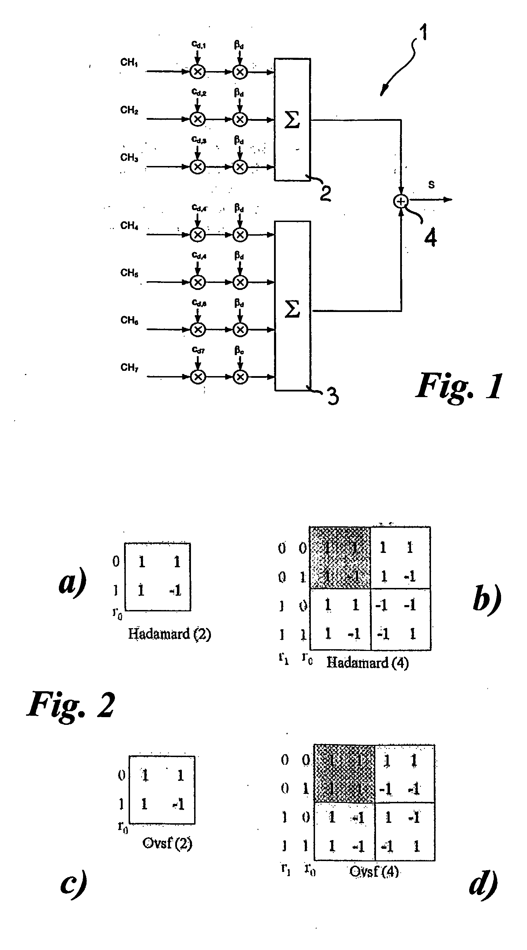

In the diagram of Figure 1, which represents a transmitter of encoded signals, designated as a whole by 1, the references $CH_1$, ..., $CH_7$ generally designate n data vectors (n = 7) which are designed to be encoded and combined together in such a way as to give rise to a single output stream s.

The above result is obtained by multiplying the various data vectors by respective sequences $c_{d,1}$ ... $c_{d,7}$, then by a scaling factor $\beta_d$, and finally by adding the results thus obtained in partial-adder nodes, designated by 2 and 3, the output lines of which flow together into a final-adder node designated by 4. The spectrum-spreading operation thus performed, which is based upon the characteristics of orthogonality of the various codes $c_{d,1}$ ... $c_{d,7}$, namely,

$$c_i \cdot c_j{}^* = 0 \qquad \text{for } i \neq j$$

and

$$c_i \cdot c_j{}^* = 1 \qquad \text{for } i = j$$

results in the output stream s occupying a band and a bit rate n times greater than the ones allocated for each input channel.

What has been described above corresponds, however, to criteria and principles altogether known to the art and already recalled in the introductory part of the present description.

A possible choice for the channelling codes $c_{d,1}$ ... $c_{d,7}$ envisages choosing the entire set of the channelling codes as rows or columns of a Hadamard matrix.

A matrix of this sort can be constructed by means of an iterative procedure based upon the recognition of the fact that the Hadamard matrix of size 2N x 2N is obtained by applying, to the matrix N x N, an operator J, which bestows on the Hadamard matrix H the property of symmetry and orthogonality, in so far as said operator J is itself symmetrical and orthogonal.

The said operator J is defined as

$$J = \begin{vmatrix} 1 & 1 \\ 1 & -1 \end{vmatrix}$$

so that

$$H(2^0) = 1$$

$$H\left(2^{n+1}\right) = \begin{vmatrix} H(2^n) & H(2^n) \\ H(2^n) & -H(2^n) \end{vmatrix} = J \bullet H\left(2^n\right).$$

In particular, Figure 2 (parts a and b) illustrates the construction of a Hadamard matrix H(4) obtained from the one of lower order H(2) by applying the operator J.

The same properties can be recognized also in the case of OVSF matrices. This may be explained if it is taken into account that, as already mentioned previously, the rows of an OVSF matrix are in effect identical to the rows of a Hadamard matrix, with the sole difference represented by the different location of the rows or columns within each matrix.

Consequently, as represented in Figure 2 (parts c and d) the OVSF matrix of a given order can be calculated by applying the operator

$$J = \begin{vmatrix} 1 & 1 \\ 1 & -1 \end{vmatrix}$$

- instead of to the matrix of the lower order - to each previous row, as indicated below:

$$C_{1,0} = 1$$

$$\begin{bmatrix} C_{2,0} \\ C_{2,1} \end{bmatrix} = \begin{bmatrix} C_{1,0} & C_{1,0} \\ C_{1,0} & -C_{1,0} \end{bmatrix} = \begin{vmatrix} 1 & 1 \\ 1 & -1 \end{vmatrix}$$

$$\begin{bmatrix} C_{2^{(n+1)},0} \\ C_{2^{(n+1)},1} \\ C_{2^{(n+1)},2} \\ C_{2^{(n+1)},3} \\ \vdots \\ C_{2^{(n+1)},2^{(n+1)}-2} \\ C_{2^{(n+1)},2^{(n+1)}-1} \end{bmatrix} = \begin{bmatrix} C_{2^n,0} & C_{2^n,0} \\ C_{2^n,0} & -C_{2^n,0} \\ C_{2^n,1} & C_{2^n,1} \\ C_{2^n,1} & -C_{2^n,1} \\ \vdots & \vdots \\ C_{2^n,2^n-1} & C_{2^n,2^n-1} \\ C_{2^n,2^n-1} & -C_{2^n,2^n-1} \end{bmatrix}$$

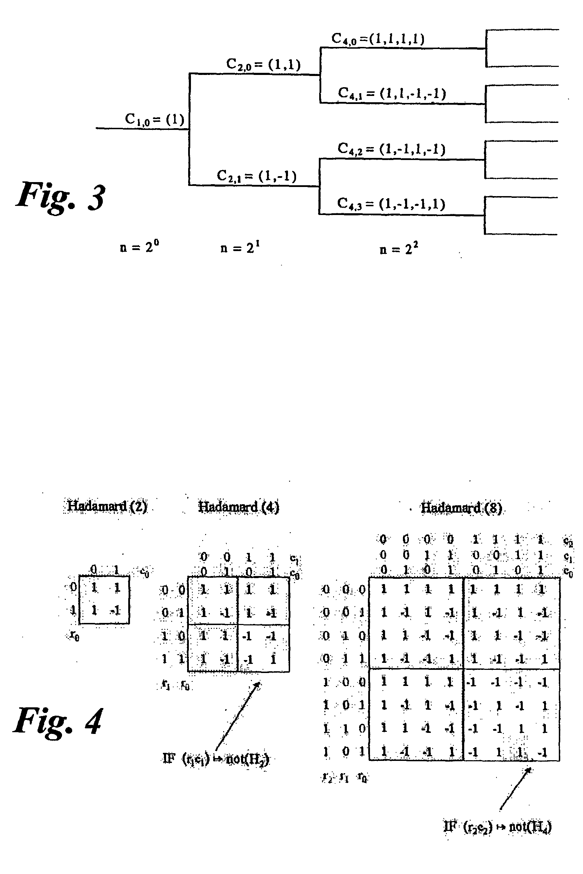

Figure 3 represents a graph for recursive construction of an OVSF matrix of any order.

At each vertex, the operator J is applied to the previous row, thus giving rise to two new rows. Since the operator J is used for generating both of the matrices, the OVSF matrix is identical to the H matrix if the order of some rows is exchanged.

More precisely, a row of the Hadamard matrix H with address $r_n...r_2r_1r_0$ - expressed in binary form - is identical to the row of the OVSF matrix with address $r_0r_1r_2...r_n$ - also in this case expressed in binary form - as may be seen in Figure 2.

A single optimized generator H can thus be used also for calculating the OVSF codes.

It is convenient to represent the elements of the matrices with zeros and ones {0, 1} instead of {-1, +1}, so as to be able to use Boolean algebra and provide an easier mathematical formulation of the problem.

In the simple case of H(2), each symbol can be expressed as a function of the row-addressing and column-addressing bits as follows:

$$H(2^1) = \begin{vmatrix} 1 & 1 \\ 1 & -1 \end{vmatrix} \qquad\qquad bit(r_0, c_0) = \overline{c_0 \cdot r_0}$$

For the matrix H(4), thanks to the relation

$$H(2^{n+1}) = J \cdot H(2^n)$$

the generic symbol $b(r_1r_0, c_1c_0)$ is calculated starting from $b(r_0, c_0)$ of the matrix $H_2$, with sign changed, conditioned to the value of the most significant addressing co-ordinates $(r_1, c_1)$

$$b(r_1 r_0, c_1 c_0) = not\left(\overline{c_0 \cdot r_0} \mid f(r_1, c_1)\right).$$

There is inversion only if the symbol that that is to be obtained is in the fourth quadrant addressed for $r_1 = c_1 = 1$:

$$b(r_1 r_0, c_1 c_0) = \overline{r_1 \cdot c_1} \ \overline{\oplus} \ \overline{c_0 \cdot r_0}$$

where the symbol $\oplus$ indicates the logic sum operator (OR).

As illustrated in greater detail in Figure 4, in a similar way it is possible to generalize the construction of any symbol whatsoever $b(r_n r_1 r_0, c_n c_1 c_0)$ belonging to the matrix $H(n)$ by applying the following formula:

$$b(r_n..r_1 r_0, c_n..c_1 c_0) = \overline{c_n \cdot r_n} \ \overline{\oplus}...\overline{\oplus} \ \overline{c_2 \cdot r_2} \overline{\oplus} \ \overline{r_1 \cdot c_1} \ \overline{\oplus} \ \overline{c_0 \cdot r_0}$$

For a spreading factor of 512, the complexity of the calculation unit is equal to 18 logic gates, to which the nine-bit row and column decoder is to be added.

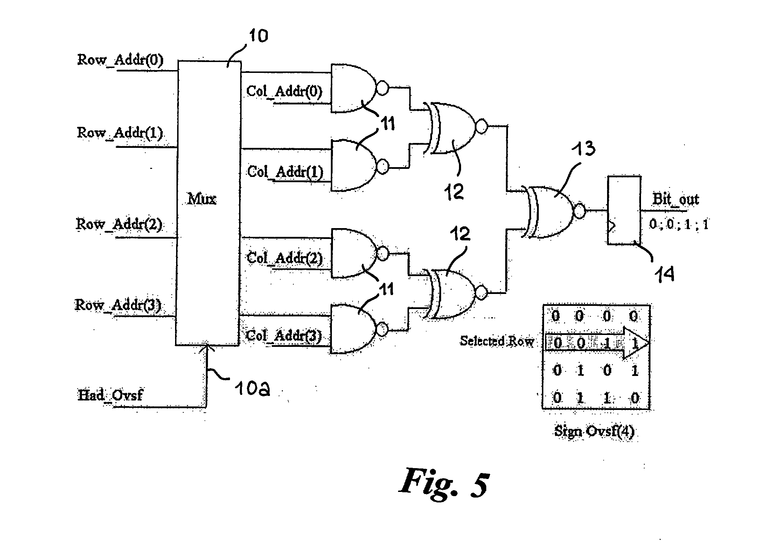

By way of example, Figure 5 presents a diagram of a dynamic generator for n = 4 based upon the implementation of the relations seen previously.

In the diagram in question, the reference number 10 designates a normal mux module to the input of which are sent the row-address signals Row_Addr(i) with i = 0,1,2,3.

The reference numbers 11 designate corresponding NOR logic gates, each of which receives on one input one of the signals coming (according to criteria that will emerge more clearly hereinafter) from the mux module 10, and also receives on the other input column-address signals Col_Addr(j) with j = 0,1,2,3.

The outputs of the NOR gates 11 are sent in pairs to the inputs of N-XOR (negated exclusive OR) gates 12, the outputs of which constitute the inputs of a further N-XOR gate 13, the output of which represents, usually with interposition of a flip-flop 14, the sequence Bit_out of the output bits s.

Finally, the reference number 10a designates an input line on which the mux module 10 receives a further logic signal Had_Ovsf, which assumes different logic levels depending upon whether a Hadamard code or an OVSF code is generated according to the criteria described in the Italian patent application already cited in the introductory part of the present description.

It will be appreciated that the row-addressing and column-addressing criteria specified previously can be applied in a complementary way with respect to what has been described, namely applying column addresses to the input of the module 10 and row addresses to the inputs of the gates 11.

If the second row of OVSF code is used, at each symbol period a bit is produced to obtain the sequence 0; 0;1;1. For reasons of convenience, the values obtained represent the sign bits of the original matrix formed by +1;-1. It should moreover be noted from the last relation mentioned above that the term

$$\overline{c_n \cdot r_n} \ \overline{\oplus} \ y = y \qquad \text{if} \qquad \overline{c_n \cdot r_n} = 1.$$

It is thus possible to partialize the penultimate relation seen previously to the first m terms for generating codes with a spreading factor lower than the maximum one allowed. With this further degree of freedom it is possible to vary dynamically the length of the codes produced by forcing to zero the most significant addressing bits $r_n$, $r_{n-1}$,..., $r_{m+1}$ and $c_n$, $c_{n-1}$, ..., $c_{m+1}$.

The solution according to the invention thus enables the generation of serial Hadamard-OVSF sequences without the use of memory banks and/or recursive procedures with dynamically variable code lengths.

The foregoing is achieved with particularly efficient solutions of implementation both at a hardware level and at a software level, and whether recourse is had to dedicated processors or to general-purpose processors on which a corresponding computer program product is run. It should finally be noted that any type of equivalent expression in terms of Boolean algebra, namely any formula that may be obtained by applying the Boolean algebra to the penultimate relation seen previously, such as factoring, decomposition, and representation by means of other logic gates (NAND, NOR, etc.), constitutes a mere variant embodiment and consequently falls within the scope of the present invention.

Of course, without prejudice to the principle of the invention, the details of construction and the embodiments may vary widely with respect to what is described and illustrated herein, without thereby departing from the scope of the present invention as defined in the attached claims.

**Claims**

1. A process for the transmission of information with the use of encoded sequences ($c_j$) consisting of orthogonal codes chosen from between Hadamard codes and OVSF codes, **characterized in that** it comprises the operation of generating the symbols of said sequences in a dynamic way as symbols $b(r_n r_1 r_0, c_n c_1 c_0)$ belonging to a respective matrix H(n), using a formula chosen in the group consisting of the formula

$$b(r_n..r_1 r_0, c_n..c_1 c_0) = \overline{c_n \cdot r_n} \ \overline{\oplus}...\overline{\oplus} \ \overline{c_2 \cdot r_2} \ \overline{\oplus} \ \overline{r_1 \cdot c_1} \ \overline{\oplus} \ \overline{c_0 \cdot r_0}$$

where $r_n r_1 r_0$, $c_n c_1 c_0$ designate the row and column co-ordinates of the symbol expressed in binary form, and the symbol $\oplus$ designates the logic-sum operator,
and of the expressions equivalent to said formula in terms of Boolean algebra.

2. The process according to Claim 1, **characterized in that** it comprises the operation of selectively partializing the aforesaid formula to the first m terms for generating codes with reduced spreading factor.

3. The process according to Claim 1 or Claim 2, **characterized in that** it comprises the operation of dynamically varying the length of the codes produced by forcing to zero the most significant addressing bits $r_n$, $r_{n-1}$, ..., $r_{m+1}$ and $c_n, c_{n-1}, ..., c_{m+1}$ within said matrix.

4. The process according to any one of Claims 1 to 3, **characterized in that** said matrix H(n) is a Hadamard matrix constructed in an iterative way by generating the Hadamard matrix of generic size 2N x 2N, applying to the matrix N x N an operator J defined as

$$J = \begin{vmatrix} 1 & 1 \\ 1 & -1 \end{vmatrix}$$

so that

$$H(2^0) = 1$$

$$H\left(2^{n+1}\right) = \begin{vmatrix} H\left(2^n\right) & H\left(2^n\right) \\ H\left(2^n\right) & -H\left(2^n\right) \end{vmatrix} = J \bullet H\left(2^n\right)$$

5. The process according to any one of Claims 1 to 3, **characterized in that** said matrix H(n) is an OVSF matrix generated by applying the operator

$$J = \begin{vmatrix} 1 & 1 \\ 1 & -1 \end{vmatrix}$$

to each previous row, so that

$$C_{1,0} = 1$$

$$\begin{bmatrix} C_{2,0} \\ C_{2,1} \end{bmatrix} = \begin{bmatrix} C_{1,0} & C_{1,0} \\ C_{1,0} & -C_{1,0} \end{bmatrix} = \begin{vmatrix} 1 & 1 \\ 1 & -1 \end{vmatrix}$$

$$\begin{bmatrix} C_{2^{(n+1)},0} \\ C_{2^{(n+1)},1} \\ C_{2^{(n+1)},2} \\ C_{2^{(n+1)},3} \\ \vdots \\ C_{2^{(n+1)},2^{(n+1)}-2} \\ C_{2^{(n+1)},2^{(n+1)}-1} \end{bmatrix} = \begin{bmatrix} C_{2^n,0} & C_{2^n,0} \\ C_{2^n,0} & -C_{2^n,0} \\ C_{2^n,1} & C_{2^n,1} \\ C_{2^n,1} & -C_{2^n,1} \\ \vdots & \vdots \\ C_{2^n,2^n-1} & C_{2^n,2^n-1} \\ C_{2^n,2^n-1} & -C_{2^n,2^n-1} \end{bmatrix}$$

6. A device for generating encoded sequences ($c_j$) ($c_j$)] made up of orthogonal codes chosen from between Hadamard codes and OVSF codes, **characterized in that** it comprises a logic network (10, 11, 12, 13, 14) for generating the symbols of said sequences in a dynamic way as symbols b($r_n r_1 r_0$, $c_n c_1 c_0$) belonging to a respective matrix H(n), said logic network (10, 11, 12, 13, 14) being configured for implementing a formula chosen in the group consisting of the formula

$$b(r_n..r_1 r_0, c_n..c_1 c_0) = \overline{c_n \cdot r_n} \oplus ... \oplus \overline{c_2 \cdot r_2} \oplus \overline{r_1 \cdot c_1} \oplus \overline{c_0 \cdot r_0}$$

where $r_n r_1 r_0$, $c_n c_1 c_0$ designate the row and column co-ordinates of the symbol expressed in binary form, and the symbol $\oplus$ designates the logic-sum operator,
and of the expressions equivalent to said formula in terms of Boolean algebra.

7. The device according to Claim 6, **characterized in that** said logic network comprises:

- a mux module (10) to the input of which are sent first signals of address (Row_Addr(i)) of said matrix H(n) ;
- a level of NOR logic gates (11) which receive at input the outputs of said mux module (10) and second signals of address (Col_Addr(j)) of said matrix H(n);
- a first level of N-XOR logic gates (12) which receives at input the outputs of said level of NOR logic gates (11); and
- a second level of N-XOR logic gates (14) which receives at input the outputs of said first level of N-XOR logic gates (13).

8. The device according to Claim 7, **characterized in that** associated to said mux module (10) is a control input (10a) which can be sent to different logic levels (Had_Ovsf) for selective control of generation of a Hadamard code and an OVSF code.

9. A computer program product directly loadable into the memory of a digital computer and comprising software code portions for performing the process according to any one of Claims 1 to 5 when said product is run on a computer.

Fig. 1

a)    Hadamard (2)

b)    Hadamard (4)

Fig. 2

c)    Ovsf (2)

d)    Ovsf (4)

$C_{4,0} = (1,1,1,1)$

$C_{2,0} = (1,1)$

$C_{4,1} = (1,1,-1,-1)$

$C_{1,0} = (1)$

$C_{4,2} = (1,-1,1,-1)$

$C_{2,1} = (1,-1)$

$C_{4,3} = (1,-1,-1,1)$

*Fig. 3*

$n = 2^0$      $n = 2^1$      $n = 2^2$

Hadamard (2)    Hadamard (4)      Hadamard (8)

*Fig. 4*

IF $(r_1 c_1) \mapsto \text{not}(H_2)$

IF $(r_2 c_2) \mapsto \text{not}(H_4)$

*Fig. 5*

## EUROPEAN SEARCH REPORT

**European Patent Office**

**Application Number**

EP 02 42 5011

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 3 795 864 A (FULLTON J) 5 March 1974 (1974-03-05) * abstract; figures 3-6,10,13 * * column 5, line 65 - column 6, line 9 * * column 6, line 52 - column 7, line 46 * | 1,2,4,6, 7,9 | H04J11/00 |
| A | MESTRE X ET AL: "ADAPTIVE BEAMFORMING FOR HIGH BIT RATE SERVICES IN THE FDD MODE OF UTRA" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 -22, 1999, IEEE VEHICULAR TECHNOLGY CONFERENCE, NEW YORK, NY: IEEE, US, vol. 4 CONF. 50, 19 September 1999 (1999-09-19), pages 1951-1955, XP000895953 ISBN: 0-7803-5436-2 * page 1951 - page 1952 * | 1,6 | |

**TECHNICAL FIELDS SEARCHED (Int.Cl.7)**

H04J

The present search report has been drawn up for all claims

| Place of search | Date of completion of the search | Examiner |
|---|---|---|
| THE HAGUE | 26 June 2002 | Fouasnon, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

ANNEX TO THE EUROPEAN SEARCH REPORT
ON EUROPEAN PATENT APPLICATION NO.

EP 02 42 5011

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2002

| Patent document cited in search report | Publication date | Patent family member(s) | Publication date |
|---|---|---|---|
| US 3795864 A | 05-03-1974 | NONE | |

EPO FORM P0459

For more details about this annex : see Official Journal of the European Patent Office, No. 12/82

13